# EUROPÄISCHE PATENTANMELDUNG

(11) **EP 3 808 797 A1**
(43) Veröffentlichungstag der Anmeldung: **21.04.2021**
(21) Anmeldenummer: 19203657.2
(22) Anmeldetag: 16.10.2019
(51) Int. Cl.: C08J 3/22, C08J 3/20

(54) **MASTERBATCH ENTHALTEND PIGMENTE, FÜLLSTOFFE UND/ODER FUNKTIONSADDITIVE, POLYMERWERKSTOFF UMFASSEND DEN MASTERBATCH, FORMKÖRPER GEBILDET AUS DEM MASTERBATCH ODER DEM POLYMERWERKSTOFF UND VERFAHREN ZUR HERSTELLUNG DES MASTERBATCHES**

(71) Anmelder: DAW SE, 64372 Ober-Ramstadt (DE)
(72) Erfinder: HÜBNER, Matthias, 04416 Markkleeberg (DE); RÖBER, Friedhelm, 04668 Grimma (DE)
(74) Vertreter: Metten, Karl-Heinz

(57) **Zusammenfassung**

Die vorliegende Erfindung betrifft einen Masterbatch, gebildet aus a) einem auf einem Styrolblockcopolymeren basierenden thermoplastischen Elastomer, b) Pigmenten, Füllstoffen oder Funktionsadditiven und c) einem paraffinischen oder naphthenischen Öl, durch i) Mischen der Komponente c) mit der Komponente b) unter Ausbildung einer Suspension, ii) Mischen der Suspension gemäß i) mit der Komponente a) und iv) Extrudieren der Zusammensetzung gemäß ii).Ferner betrifft die Erfindung einen Polymerwerkstoff, umfassend den Masterbatch und ein Matrixpolymer. Außerdem stellt die Erfindung ab auf einen Formkörper, erhältlich aus dem Polymerwerkstoff oder dem Masterbatch, sowie auf ein Verfahren zur Herstellung des Masterbatches oder des Polymerwerkstoffs, umfassend die Schritte: i) Mischen des paraffinischen oder naphthenischen Öls mit den Pigmenten, Füllstoffen oder Funktionsadditiven unter Ausbildung einer Suspension, ii) Mischen der Suspension gemäß i) mit dem auf einem Styrolblockcopolymeren basierenden thermoplastischen Elastomer und iv) Extrudieren der Zusammensetzung gemäß ii). Darüber hinaus betrifft die Erfindung ein Kit-of-parts-System für die Herstellung des Masterbatches.

## Beschreibung

Die vorliegende Erfindung betrifft einen Masterbatch enthaltend Pigmente, Füllstoffe und/oder Funktionsadditive. Ferner betrifft die Erfindung einen Polymerwerkstoff umfassend diesen Masterbatch sowie einen Formkörper gebildet aus dem Masterbatch oder dem Polymerwerkstoff. Schließlich betrifft die Erfindung ein Verfahren zur Herstellung des Masterbatches.

Masterbatches werden regelmäßig zur anwendungsspezifischen Modifizierung, insbesondere Einfärbung von Kunststoffen eingesetzt. Masterbatches stellen hierbei polymergebundene Additivkonzentrate dar. Der Vorteil solcher Masterbatches ist, dass sie regelmäßig nur in sehr geringen Mengen einem Polymerwerkstoff beigemischt werden müssen, um dessen gewünschte Einfärbung bzw. Modifizierung herbeizuführen. Diese Mengen liegen häufig im Bereich von 0,5 bis fünf Gewichtsprozent. Grundsätzlich können zwei Klassifizierungssysteme für die Einteilung von Masterbatches verwandt werden. Zum einen können Masterbatches eingeteilt werden in Farb-, Additiv- und Kombinationsmasterbatches. Diese Einteilung ist funktionsorientiert. Zum anderen können Masterbatches mit Blick auf das polymere Matrixmaterial, in das diese Masterbatches eingemischt werden, unterteilt werden in universale und polymerspezifische Masterbatches. Aufgrund von Kompatibilitätsproblemen, die auf die teilweise Unverträglichkeit der Polymere zurückzuführen sind, welche einerseits für den Masterbatch und andererseits für das polymere Matrixmaterial verwendet werden, und in Entmischungsphänomenen und Dispergierfehlern resultieren, sind universale Masterbatches für viele Anwendungen weiterhin problematisch, obgleich universale Masterbatches unter Lager- und Logistikaspekten durchaus ein erhebliches Rationalisierungspotenzial mit sich bringen würden. Der erfolgreiche Einsatz von Masterbatches hat seine Ursache insbesondere auch darin, dass feststoffbasierte Additive in Masterbatchpräparationen vollständig oder nahezu vollständig dispergiert vorliegen können. Hiermit geht einher, dass das dispersive Mischen zum Aufbrechen und Zerteilen von Agglomeraten und Aggregaten bei der Herstellung von Kunststoffwerkstoffen kaum erforderlich ist. Demgemäß sind in der Regel beim Einmischen von Masterbatches in polymere Matrixmaterialien keine zusätzlichen Dispergierhilfsmittel zuzugeben. Masterbatches werden im Allgemeinen in Form von Granulaten erhalten. Hierbei lassen sich solche Masterbatches besonders gut handhaben, bei denen die Granulate rieselfähig und staubfrei sind.

Masterbatches werden im Allgemeinen nach einem einstufigen oder einem zweistufigen Verfahren hergestellt. Bei der einstufigen Fertigung werden alle Rohstoffkomponenten vorgelegt und extrudiert. Bei der zweistufigen Variante werden zunächst sogenannte Monokonzentrate hergestellt, die anschließend nochmals gemischt und gegebenenfalls mit Additiven versehen und extrudiert werden. Um Masterbatches wirtschaftlich herstellen zu können, werden nach dem Stand der Technik kontinuierliche Extrusions- und Knetaggregate verwendet. Die Homogenität des Farbtons und der Pigmente im Masterbatch hängt dabei regelmäßig davon ab, welches Fließverhalten in der Schmelze erreicht wird, wie gut die Makromolküle die Pigmente und/oder Füllstoffe benetzen können bzw. wie gut sich die Pigmente und/oder Füllstoffe in der Matrix verteilen. Oftmals gelingt es daher nicht oder nur in unzureichendem Umfang, Pigmente und/oder Füllstoffe unter Erhalt einer homogenen Durchmischung in einen Masterbatch einzuarbeiten. Aus diesem Grund werden Dispergierhilfsmittel bei der Masterbatchfertigung eingesetzt. Gleichwohl sind die maximalen Pigment-/Füllstoffkonzentrationen noch stets beschränkt. Dies steht dem allgemeinen Wunsch entgegen, Masterbatches mit sehr hohen Konzentrationen an Pigmenten oder Funktionsadditiven verfügbar machen zu können. So können beispielsweise durch trockene Calcinierung hergestellte Pigmente regelmäßig nur unter hohem Energieeintrag und zudem meist nur unvollständig in einen Masterbatch eingebracht werden. Man spricht hier auch von sogenannten dispergierharten Pigmenten.

Es ist daher wünschenswert, Masterbatches zu finden, in die weniger abhängig von dem zugrunde liegenden Polymer Pigmente und/oder Füllstoffe in hoher Konzentration einbringbar sind. Daher lag der vorliegenden Erfindung die Aufgabe zu Grunde, ein Verfahren zur Herstellung von Masterbatches bzw. nach diesem Verfahren erhaltene Masterbatche zur Verfügung zu stellen, die nicht mehr mit den Nachteilen des Stands der Technik behaftet sind und die insbesondere den unproblematischen Eintrag großer Mengen an Pigmenten und/oder Füllstoffen in vielfältige Polymermaterialien gestatten. Insbesondere lag der vorliegenden Erfindung auch die Aufgabe zugrunde, einen wirtschaftlichen und zuverlässigen Zugang zu Masterbatches zu ermöglichen, die über hohe Konzentrationen an Pigmenten und/oder Füllstoffen verfügen.

Demgemäß wurde ein Masterbatch gefunden, enthaltend oder gebildet aus
a) mindestens einem auf einem Styrolblockcopolymeren basierenden thermoplastischen Elastomer,
b) einem oder mehreren Pigmenten und/oder einem oder mehreren Füllstoffen und/oder einem oder mehreren bei Raumtemperatur festen Funktionsadditiven und
c) mindestens einem paraffinischen und/oder naphthenischen Öl,
insbesondere erhalten durch
i) Mischen der Komponente c) mit, insbesondere einem Teil, der Komponente b) unter Ausbildung einer Suspension,
ii) Mischen der Suspension gemäß i) mit der Komponente a), insbesondere unter Ausbildung einer pulverförmigen Masse,
iii) gegebenenfalls Mischen der Zusammensetzung gemäß ii) mit einem weiteren, insbesondere dem verbleibenden, Teil der Komponente b), insbesondere unter Ausbildung einer pulverförmigen oder pastösen Masse, und
iv) Extrudieren der Zusammensetzung gemäß ii) oder iii), insbesondere unter Ausbildung eines Granulats.

Als thermoplastische Elastomere, die auf einem Styrolblockcopolymeren basieren, wird bevorzugt zurückgegriffen auf Styrol-Ethylen-Butylen-Styrol-Blockcopolymeren (SEBS), Styrol/Butadien-Styrol-Blockcopolymeren (SBS), Styrol-Ethylen/Propylen-Styrol-Blockcopolymeren (SEPS), Styrol-Isopren-Styrol-Blockcopolymeren (SIS), Styrol/Ethen-Ethen-Propen/Styrol-Bblockcopolymere (SEEPS), Styrol/Butadien-Isopren/Styrol-Blockcopolymeren (SBIS), vernetzungsfähigen Styrol-Ethylen-Propylen-Styrol-Blockcopolymeren oder deren beliebige Mischungen. Besonders bevorzugt kommen hierbei SEBS-Blockcopolymere zum Einsatz.

Grundsätzlich können für die erfindungsgemäßen Masterbatche Füllstoffe ausgewählt werden aus der Gruppe bestehend aus silikatischen Füllstoffen, calcitischen Füllstoffen, Bariumsulfat und deren beliebige Mischungen. Bevorzugt unter den silikatischen Füllstoff sind solche mit einer durchschnittlichen Partikelgröße D50 von nicht mehr als 250 µm, insbesondere im Bereich von 20 µm bis 200 µm. Exemplarisch seien als besonders geeignete silikatische Füllstoffe Quarzite, Schichtsilikate, Talk, Glimmer, Kaolin, Feldspate, Vulkanite, Kieselerden, wie Kieselgur und Diatomeenerden, und beliebigen Mischungen hiervon genannt, Unter den calcitischen Füllstoffen wird bevorzugt auf Füllstoffe mit einer Dichte größer oder gleich 2,0 kg/l, bevorzugt größer oder gleich 2,2 kg/l und besonders bevorzugt größer oder gleich 2,4 kg/l zurückgegriffen. Die durchschnittliche Partikelgröße D50 bevorzugter calcitischer Füllstoffe liegt im Bereich von 10 µm bis 100 µm und insbesondere im Bereich von 20 µm bis 50 µm. Exemplarisch seien als besonders geeignete silikatische Füllstoffe Calciumcarbonate, Dolomite, Calcite, Aragonite und deren beliebige Mischungen genannt. Die Partikelgröße D50 der vorangehend genannten Füllstoffe kann gemäß DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2: Berechnung von mittleren Partikelgrößen/-durchmessern und Momenten aus Partikelgrößenverteilungen) ermittelt werden. Für die Bestimmung der D50-Werte kann dabei auf den sogenannten Laser Scattering Particle Size Distribution Analyser, wie von der Firma Horiba unter der Gerätebezeichnung "LA 950 V2" erhältlich, zurückgegriffen werden.

Für die erfindungsgemäßen Masterbatche wird bevorzugt auf Pigmente zurückgegriffen ausgewählt aus der Gruppe bestehend aus Metalloxiden, insbesondere Eisenoxid, Chromoxid oder Titandioxid, Ruß, insbesondere Farbruß, Metallchromaten, insbesondere Bleichromat-gelb, Molybdatorange, Komplexen anorganischer Buntpigmente, insbesondere Chromtitangelb, Chromeisenbraun, Kobaltblau, Nickeltitangelb, Zinkeisenbraun oder Wismutvanadatgelb, Sulfiden, insbesondere Cadmiumsulfid, Cersulfid, Ultramarin oder Zinksulfid, Azopigmenten, insbesondere verlackte Azopigmente, Disazopigmenten, Diazokondensationspigmenten, Benzimidazolpigmenten, Metallkomplexpigmenten, Isoindolinpigmenten, Isoindolinonpigmenten, und polyzyklischen Pigmenten, insbesondere Chinacridon, Chinophthalon, Diketo-Pyrrolo-Pyrrol, Disoxazinpigmenten, Indanthron, Perylen oder Phthalocyanin und deren beliebige Mischungen.

Alternativ oder zusätzlich zu Füllstoffen und/oder Pigmenten können die erfindungsgemäßen Masterbatche, insbesondere in hohen Konzentrationen, auch ausgestattet sein mit Funktionsadditiven, insbesondere ausgewählt aus der Gruppe bestehend aus Nukleierungsmitteln, Schichtsilikaten, insbesondere delaminierte Schichtsilikate, Stabilisatoren, insbesondere Thermostabilisatoren, Lichtstabilisatoren, UV-Stabilisatoren, Antistatika, Flammschutzmitteln, Haftvermittlern, Antiblockmitteln, Verarbeitungshilfsmitteln, Treibmitteln, antimikrobiellen Mitteln, insbesondere antibakterielle Mittel, und beliebigen Mischungen hiervon.

Mit den erfindungsgemäßen Masterbatches sind insbesondere auch solche Ausführungsformen zugänglich, enthaltend mehr als 50 Gew.-%, vorzugsweise mindestens 65 Gew.-% und besonders bevorzugt 70 bis 85 Gew.-% an mindestens einem anorganischen Pigment als Komponente b), bezogen auf das Gesamtgewicht des Masterbatches. Ferner sind in bevorzugte Ausgestaltungen auch solche erfindungsgemäßen Masterbatche zugänglich, enthaltend mehr als 25 Gew.-%, vorzugsweise mindestens 30 Gew.-% und besonders bevorzugt 35 bis 45 Gew.-% an mindestens einem organischen Pigment als Komponente b), bezogen auf das Gesamtgewicht des Masterbatches.

Die erfindungsgemäßen Masterbatche zeichnen sich insbesondere auch dadurch aus, dass darin bevorzugt im Bereich von 0,1 bis 65 Gew.-%, besonders bevorzugt im Bereich von 0,5 bis 50 Gew.-%, insbesondere im Bereich von 1,0 bis 35 Gew.-% oder im Bereich von als 1,5 bis 25 Gew.-%, an Ruß, insbesondere Farbruß, (Komponente b)), bezogen auf das Gesamtgewicht des Masterbatches, enthalten sind. Alternativ und insbesondere zusätzlich kann für eine besonders zufriedenstellende Lösung der der Erfindung zugrunde liegende Aufgabe vorgesehen sein, dass die erfindungsgemäßen Masterbatche 5 bis 95 Gew.-%, bevorzugt 10 bis 90 Gew.-% an Komponente c), bezogen auf das Gewicht der Komponente a), enthalten.

Die in den erfindungsgemäßen Masterbatchen verwendeten Ruße, insbesondere Farbruße, (Komponente b)) verfügen in besonders vorteilhaften Ausgestaltungen über eine BET-Oberfläche, bestimmt gemäß ASTM D-6556-19, im Bereich von 10 bis 500 m²/g, bevorzugt im Bereich von 10 bis 400 m²/g, besonders bevorzugt im Bereich von 25 bis 400 m²/g und insbesondere im Bereich von 25 bis 350 m²/g.

In den erfindungsgemäßen Masterbatches umfasst bei der Komponente c) das paraffinische Öl vorzugsweise Weißöl oder stellt dieses dar. Die Komponente c) liegt in den erfindungsgemäßen Masterbatches, bezogen auf das Gewicht der Komponente a), d. h. bezogen auf die Menge an thermoplastischem Elastomer, das auf Styrolblockcopolymeren basiert, bevorzugt in einer Menge im Bereich von 5 bis 95 Gew.-% und besonders bevorzugt im Bereich von 10 bis 90 Gew.-% vor.

Die Komponente a) der erfindungsgemäßen Masterbatche wird in zweckmäßigen Ausgestaltungen entweder in Pulverform oder in Granulatform eingesetzt. Masterbatche, mit denen sich die der Erfindung zugrunde liegende Aufgabe besonders zufriedenstellend lösen lässt, sind vorzugsweise im Wesentlichen frei von Dispergierhilfsmitteln und/oder Netzmitteln, besonders bevorzugt im Wesentlichen frei von Dispergierhilfsmitteln und Netzmitteln. Auch hat es sich als zweckmäßig erwiesen, auf solche erfindungsgemäßen Masterbatche zurückzugreifen, die alternativ sowie insbesondere zusätzlich im Wesentlichen frei von bei Raumtemperatur flüssigen Siliconen, insbesondere frei von jeglichen Silikonen, sind.

Bei der Herstellung der erfindungsgemäßen Masterbatche werden die Schritte i), ii) und/oder iii), bevorzugt mindestens der Schritt i) und besonders bevorzugt die Schritte i) und ii) sowie gegebenenfalls auch iii) vorzugsweise in einem diskontinuierlichen Mischaggregat durchgeführt. Auf diese Weise gelingt die Einbringung der Komponente b) besonders effizient und vollständig. Für diese diskontinuierlichen Mischaggregate kann dabei geeigneter Weise zurückgegriffen werden auf Kneter, Innenmischer, Butterfly-Mischer, Dissolver-Mischer, Schnecken-Mischer, Paddel-Mischer, Planeten-Mischer, Perlmühlen oder Dreiwalzreibstuhl-Mischer.

Für viele Anwendungen hat es sich als besonders zweckmäßig erwiesen, wenn bei der Herstellung der erfindungsgemäßen Masterbatche die in Schritt iii) erhaltene Zusammensetzung in Schritt iv) gemeinsam mit einem thermoplastischen Polymer extrudiert wird. Dieses thermoplastische Polymer wird dabei bevorzugt in Pulver- oder Granulatform mit zum Extruder zugegeben. Für das dem thermoplastischen Elastomer beimengbare thermoplastische Polymer wird vorzugsweise auf Polyester, Polyamide, Polystyrol, Styrol-Copolymere, Polyolefine oder deren beliebige Mischungen zurückgegriffen.

Das thermoplastische Polymer, das für die erfindungsgemäßen Masterbatche mit verwendet werden kann, stellt vorzugsweise ein sogenanntes Rohpolymer dar. Bei einem Rohpolymer handelt es sich regelmäßig um unbehandeltes Kunststoffmaterial, d.h. um ein Kunststoffmaterial, das noch keine Füllstoffe, Farbmittel, z.B. Pigmente, Additive und dergleichen enthält. Geeignete thermoplastische Polymeren, insbesondere Rohpolymere, können dabei ausgewählt werden aus der Gruppe bestehend aus Polyolefinen, insbesondere Polypropylen, Polyethylen und/oder Ethylen/Propylen- Copolymere, Polyamiden, Polycarbonaten, Polybutylen, Polyisobutylen, Polymethylmethacrylaten, Polymethacrylmethylimiden, Polyoxymethylen, Polyphenylenethern, Polystyrol, Polytetrafluorethylen, Polyvinylacetat, Polyvinylalkohol, Polyvinylchlorid, Polyvinylidenchlorid, Polyvinylidenfluorid, Polyestern, insbesondere Polyethylenterephthalat und/oder Polybutylenterephthalat und/oder thermoplastischen Polyesterelastomeren, Polyurethanen, Ethylen-Tetrafluorethylen-Copolymeren, Ethylenvinylacetat-Copolymeren, Ethylenvinylalkohol-Copolymeren, Styrol-Copolymeren, insbesondere ausgewählt aus der Gruppe bestehend aus Acrylnitril-Butadien-Styrol-Copolymeren, Acrylester-Styrol-Acrylnitril-Copolymeren, Methylmethacrylat-Acrylnitril-Butadien-Styrol-Copolymeren, Methacrylat-Butadien-Styrol-Copolymeren, Styrol-Acrylnitril-Copolymeren, Styrolbutadien-Copolymeren und Styrol-Maleinsäureanhydrid-Copolymeren, und deren beliebige Mischungen.

Die der Erfindung zugrunde liegende Aufgabe wird des Weiteren gelöst durch einen Polymerwerkstoff, umfassend mindestens einen erfindungsgemäßen Masterbatch und mindestens ein Matrixpolymer. Hierbei liegt der Masterbatch vorzugsweise als Mindermenge, besonders bevorzugt im Bereich von 0,1 bis 10 Gew.-% und insbesondere im Bereich von 0,5 bis 5 Gew.-%, und das Matrixpolymer in einer Hauptmenge, bevorzugt im Bereich von 90 bis 99,9 Gew.-% und insbesondere im Bereich von 95 bis 99,5 Gew.-%, vor. Für das Matrixpolymer wird bevorzugt auf thermoplastische Polymere zurückgegriffen. Zusätzlich oder vorzugsweise alternativ können für das Matrixpolymer auch thermoplastische Elastomere, Elastomere, Duromere oder deren Mischungen eingesetzt werden.

Greift man für den erfindungsgemäßen Polymerwerkstoff auf thermoplastische Matrixpolymere zurück, was regelmäßig bevorzugt ist, werden diese bevorzugt ausgewählt aus der Gruppe bestehend aus Polyolefinen, insbesondere Polypropylen, Polyethylen und/oder Ethylen/Propylen-Copolymere, Polyamiden, Polycarbonaten, Polybutylen, Polyisobutylen, Polymethylmethacrylaten, Polymethacrylmethylimiden, Polyoxymethylen, Polyphenylenethern, Polystyrol, Polytetrafluorethylen, Polyvinylacetat, Polyvinylalkohol, Polyvinylchlorid, Polyvinylidenchlorid, Polyvinylidenfluorid, Polyestern, insbesondere Polyethylenterephthalat und/oder Polybutylenterephthalat und/oder thermoplastischen Polyesterelastomeren, Polyurethanen, Acrylnitril-Butadien-Styrol-Copolymeren, Acrylester-Styrol-Acrylnitril-Copolymeren, Ethylen-Tetrafluorethylen-Copolymeren, Ethylenvinylacetat-Copolymeren, Ethylenvinylalkohol-Copolymeren, Methylmethacrylat-Acrylnitril-Butadien-Styrol-Copolymeren, Methacrylat-Butadien-Styrol-Copolymeren, Styrol-Acrylnitril-Copolymeren, Styrolbutadien-Copolymeren, Styrol-Maleinsäureanhydrid-Copolymeren und deren beliebige Mischungen.

Für viele Anwendungen hat es sich als zweckmäßig erwiesen, dass in dem erfindungsgemäßen Polymerwerkstoff 0,5 bis 55 Gew.-% an dem erfindungsgemäßen Masterbatch und 45 bis 99,5 Gew.-% an Matrixpolymer, insbesondere thermoplastischem Matrixpolymer, vorliegen.

Die erfindungsgemäßen Formkörpern lassen sich aus den geschilderten Komponenten zum Beispiel durch Spritzgießen, Extrudieren, Formpressen, Tiefziehen, Vakuumformen, Walzenrotation, Rotationsformen, Lasersintern, Fused Deposition Modelling (FDM), Granulieren und/oder Gießen des Polymerwerkstoffs erhalten.

Die erfindungsgemäßen Polymerwerkstoffe lassen sich insbesondere durch Mischen mindestens eines polymeren Matrixmaterials mit den nach dem erfindungsgemäßen Verfahren erhältlichen Masterbatches, jeweils in geschmolzenem Zustand, und Abkühlen der Mischung erhalten.

Mit dem erfindungsgemäßen Verfahren gelingt es regelmäßig, auf zuverlässige Weise Masterbatche zu erhalten, die sich unabhängig von der gewählten Konzentration unter Ausbildung der erfindungsgemäßen Polymerwerkstoffe sehr gut in polymere Matrixmaterialien einarbeiten lassen, ohne dass die Pigmente, Füllstoffe oder Funktionsadditive verklumpen oder dass Inhomogenitäten in den compoundierten Polymerwerkstoffen auftreten.

Die mit den erfindungsgemäßen Masterbatche ausgestatteten Polymerwerkstoffe zeichnen sich regelmäßig durch eine ausgeprägte Elastizität selbst bei niedrigen Temperaturen aus. Das polymere Material der erfindungsgemäßen Masterbatche wie auch die erfindungsgemäßen Polymerwerkstoffe enthaltend die erfindungsgemäßen Masterbatche verfügen über die vorteilhafte Eigenschaft, Pigmente, Füllstoffe oder Funktionsadditive über einen sehr breiten Konzentrationsbereich, insbesondere in sehr hohen Konzentrationen, in homogener Verteilung aufzunehmen, und zwar ohne dass es zur Bildung von Agglomeraten oder Aggregaten kommt.

Die der Erfindung zugrunde liegende Aufgabe wird des Weiteren gelöst durch ein Verfahren zur Herstellung des erfindungsgemäßen Masterbatches, umfassend die Schritte:
i) Mischen des paraffinischen und/oder naphthenischen Öls (Komponente c)) mit den Pigmenten und/oder Füllstoffen und/oder bei Raumtemperatur festen Funktionsadditiven oder einem Teil davon (Komponente b)) unter Ausbildung einer Suspension,
ii) Mischen der Suspension gemäß i) mit dem, insbesondere in Pulverform vorliegenden, auf einem Styrolblockcopolymeren basierenden thermoplastischen Elastomer (Komponente a)), insbesondere unter Ausbildung einer pulverförmigen Masse,
iii) gegebenenfalls Mischen der Zusammensetzung gemäß ii) mit einem weiteren, insbesondere dem verbleibenden, Teil der Komponente b), insbesondere unter Ausbildung einer pulverförmigen oder pastösen Masse, und
iv) Extrudieren der Zusammensetzung gemäß ii) oder iii), insbesondere unter Ausbildung eines Granulats.

Eine besonders homogene der Komponenten des erfindungsgemäßen Masterbatches wird insbesondere auch dadurch erhalten, dass die Zusammensetzung gemäß iii) in Schritt iv) gemeinsam mit einem, insbesondere in Pulver- oder Granulatform zum Extruder zugegebenen, thermoplastischen Polymer, insbesondere einem Polyester, Polystyrol, Styrol-Copolymeren oder Polyolefin, extrudiert wird.

Dabei sind solche Ausführungsvariante von besonderem Vorteil, bei denen die Schritte i), ii) und/oder iii), insbesondere die Schritte i) und ii) sowie gegebenenfalls auch iii), in einem diskontinuierlichen Mischaggregat durchgeführt werden. Das diskontinuierliche Mischaggregat wird bei dem erfindungsgemäßen Verfahren vorzugsweise ausgewählt aus der Gruppe bestehend aus Knetern, Innenmischern, Butterfly-Mischern, Dissolver-Mischern, Schnecken-Mischern, Paddel-Mischern, Planeten-Mischern, Perlmühlen und Dreiwalzreibstuhl-Mischern.

Ein besonders hoher Eintrag an Komponente b) in den Masterbatch gelingt auch dadurch, dass die Schritte i), ii) und/oder iii), insbesondere die Schritte i) und ii) oder die Schritte i), ii) und iii), ohne externe Wärmezufuhr durchgeführt werden und/oder dass der Schritt iv) mit externer Wärmezufuhr durchgeführt wird, insbesondere mit einer Wärmemenge, die ausreicht, das auf einem Styrolblockcopolymeren basierende thermoplastische Elastomer (Komponente a)) und/oder das thermoplastische Polymer auf eine Temperatur oberhalb der Glasübergangs- und/oder Schmelztemperatur, insbesondere oberhalb der Glasübergangstemperatur und gegebenenfalls auch der Schmelztemperatur, zu erwärmen und/oder dass die Schritte i), ii) und/oder iii), insbesondere die Schritte i) und ii) oder die Schritte i), ii) und iii), unter Kühlung durchgeführt werden.

Bei dem erfindungsgemäßen Verfahren liegen in einer bevorzugten Ausführungsform in der gemäß Schritt i) erhaltenen Suspension die darin vorliegendne Pigmente, Füllstoffe und/oder, insbesondere und, Funktionsadditivemit einer durchschnittlichen Partikelgröße kleiner oder gleich 50 µm vor. Für die Bestimmung der durchschnittlichen Partikelgröße kann ein sogenannter Laser Scattering Particle Size Distribution Analyser, z.B. von der Firma Horiba unter der Gerätebezeichnung "LA 950 V2" erhältlich, wie schon vorangehend beschrieben, eingesetzt werden.

Das erfindungsgemäße Verfahren wird in einer zweckmäßigen Ausgestaltung im Wesentlichen unter Ausschluss von Feuchtigkeit und/oder unter Schutzgas, insbesondere Stickstoff oder Argon, durchgeführt.

Eine solche Verfahrensführung führt regelmäßig zu vorteilhaften Resultaten, bei der der Schritt i) und der Schritt ii) sowie gegebenenfalls auch der Schritt iii) in einem Extruder umfassend mindestens ein förderndes Element stattfinden.

Zur Förderung eines komplikationslosen Verfahrensverlaufs kann man den Extruder in Schritt ii), iii) und/oder iv) entgasen, insbesondere vakuumentgasen.

Um einen regelmäßig stets einwandfreien Verfahrensverlauf sicherzustellen, kann man in einer bevorzugten Ausführungsform des erfindungsgemäßen Verfahrens vorsehen, dass der Extruder im Übergang vom Getriebe zu einem Schneckenzylinder, insbesondere mittels einer Stopfbuchspackung, abgedichtet wird.

Schließlich wird die der Erfindung zugrunde liegende Aufgabe gelöst durch ein Kit-of-parts-System für die Herstellung des erfindungsgemäßen Masterbatches, umfassend
Ai) eine Suspension enthaltend oder gebildet aus dem einen oder mehreren Pigmenten und/oder dem einen oder mehreren Füllstoffen und/oder dem einen oder mehreren bei Raumtemperatur festen Funktionsadditiven (Komponente b)) und dem einen paraffinischen und/oder naphthenischen Öl (Komponente c)) oder
Aii) eine Mischung aus der Suspension gemäß i) und dem mindestens einen auf einem Styrolblockcopolymeren basierenden thermoplastischen Elastomer (Komponente a)), insbesondere in Form einer pulverförmigen Masse, oder
Aiii) eine Mischung aus der Mischung gemäß ii) und einer Suspension enthaltend oder gebildet aus dem einen oder mehreren Pigmenten, insbesondere Farbruß, und/oder dem einen oder mehreren Füllstoffen und/oder dem einen oder mehreren bei Raumtemperatur festen Funktionsadditiven (Komponente b)), insbesondere in Form einer pulverförmigen oder pastösen Masse; und
B) dem mindestens einen, insbesondere in Pulver- oder Granulatform vorliegenden, thermoplastischen Polymer.

Mit den erfindungsgemäßen Masterbatches gelingt es ohne weiteres, hochkonzentrierte Systeme an Pigmenten, Füllstoffen und/oder Funktionsadditiven zu erhalten, wobei diese Masterbatche, idealerweise auf SEBS-Basis, ohne Dispergiermittel auskommen. Darüber hinaus ermöglicht es das erfindungsgemäße Verfahren Masterbatche mit signifikant höheren Mengen an Füllstoffen, Pigmenten und/oder Funktionsadditiven zugänglich zu machen. Von besonderem Vorteil ist auch, dass mit dem erfindungsgemäßen Verfahren gegenüber herkömmlichen Verfahren erheblich längere Verweil-, Misch- und Dispergierzeiten in den verwendeten Mischaggregaten möglich sind. Von Vorteil ist weiterhin, dass mit den erfindungsgemäßen Masterbatches silikonfreie Produkte erhalten werden können, die zudem geeignet sind, eine lebensmittelrechtliche Zulassung zu erhalten. Aufgrund der hohen Konzentrationen an Pigmenten, Füllstoffe und/oder Funktionsadditiven in den erfindungsgemäßen Masterbatches und Polymerwerkstoffe kann der Anteil an Matrixpolymeren in daraus erhaltenen Formkörpern merklich erhöht werden, ohne dass dadurch beispielsweise Einbußen bei der Zähigkeit und Bruchdehnung in Kauf genommen werden müssen.

Die in der voranstehenden Beschreibung und den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Masterbatch, enthaltend oder gebildet aus
a) mindestens einem auf einem Styrolblockcopolymeren basierenden thermoplastischen Elastomer, wobei die Komponente a) vorzugsweise in Pulver- oder Granulatform vorliegt.
b) einem oder mehreren Pigmenten und/oder einem oder mehreren Füllstoffen und/oder einem oder mehreren bei Raumtemperatur festen Funktionsadditiven und
c) mindestens einem paraffinischen und/oder naphthenischen Öl,
durch
i) Mischen der Komponente c) mit, insbesondere einem Teil, der Komponente b) unter Ausbildung einer Suspension,
ii) Mischen der Suspension gemäß i) mit der Komponente a), insbesondere unter Ausbildung einer pulverförmigen Masse,
iii) gegebenenfalls Mischen der Zusammensetzung gemäß ii) mit einem weiteren, insbesondere dem verbleibenden, Teil der Komponente b), insbesondere unter Ausbildung einer pulverförmigen oder pastösen Masse, und
iv) Extrudieren der Zusammensetzung gemäß ii) oder iii), insbesondere unter Ausbildung eines Granulats.

2. Masterbatch nach Anspruch 1, **dadurch gekennzeichnet, dass** das paraffinische Öl Weißöl umfasst oder darstellt.

3. Masterbatch nach Anspruch 1 oder 2, **dadurch gekennzeichnet, dass** dieses im Wesentlichen frei von Dispergierhilfsmitteln und/oder Netzmitteln ist und/oder dass
dieses im Wesentlichen frei von bei Raumtemperatur flüssigen Siliconen, insbesondere frei von jeglichen Silikonen, ist.

4. Masterbatch nach einem der vorangehenden Ansprüche, **dadurch gekennzeichnet, dass**
das Styrolblockcopolymer-basierte thermoplastische Elastomer ein Rohpolymer darstellt und/oder ausgewählt ist aus der Gruppe bestehend aus Styrol-Ethylen-Butylen-Styrol-Blockcopolymeren (SEBS), Styrol/Butadien-Styrol-Blockcopolymeren (SBS), Styrol-Ethylen/Propylen-Styrol-Blockcopolymeren (SEPS), Styrol-Isopren-Styrol-Blockcopolymeren (SIS), Styrol/Ethen-Ethen-Propen/Styrol-Bblockcopolymere (SEEPS), Styrol/Butadien-Isopren/Styrol-Blockcopolymeren (SBIS), vernetzungsfähigen Styrol-Ethylen-Propylen-Styrol-Blockcopolymeren und deren beliebigen Mischungen, insbesondere SEBS-BlockcopolymerE umfasst oder darstellt.

5. Masterbatch nach einem der vorangehenden Ansprüche, **dadurch gekennzeichnet, dass**
der Füllstoff ausgewählt ist aus der Gruppe bestehend aus silikatischen Füllstoffen, insbesondere mit einer durchschnittlichen Partikelgröße D50 von nicht mehr als 250 µm, insbesondere im Bereich von 20 µm bis 200 µm, beispielsweise ausgewählt aus der Gruppe bestehend aus Quarziten, Schichtsilikaten, Talk, Glimmer, Kaolin, Feldspate, Vulkaniten, Kieselerden, wie Kieselgur und Diatomeenerden, und beliebigen Mischungen hiervon,
calcitischen Füllstoffen, insbesondere mit einer Dichte größer oder gleich 2,0 kg/l, bevorzugt größer oder gleich 2,2 kg/l und besonders bevorzugt größer oder gleich 2,4 kg/l und/oder mit einer durchschnittlichen Partikelgröße D50 im Bereich von 10 µm bis 100 µm, insbesondere im Bereich von 20 µm bis 50 µm, beispielsweise ausgewählt aus der Gruppe bestehend aus Calciumcarbonaten, Dolomiten, Calciten, Aragoniten und deren Mischungen,
Bariumsulfat und deren beliebige Mischungen und/oder
dass die Pigmente ausgewählt sind aus der Gruppe bestehend aus Metalloxiden, insbesondere Eisenoxid, Chromoxid oder Titandioxid,
Ruß, insbesondere Farbruß,
Metallchromaten, insbesondere Bleichromat-gelb,
Molybdatorange,
Komplexen anorganischer Buntpigmente, insbesondere Chromtitangelb, Chromeisenbraun, Kobaltblau, Nickeltitangelb, Zinkeisenbraun oder Wismutvanadatgelb, Sulfiden, insbesondere Cadmiumsulfid, Cersulfid, Ultramarin oder Zinksulfid, Azopigmenten, insbesondere verlackte Azopigmente, Disazopigmenten, Diazokondensationspigmenten, Benzimidazolpigmenten, Metallkomplexpigmenten, Isoindolinpigmenten, Isoindolinonpigmenten, und polyzyklischen Pigmenten, insbesondere Chinacridon, Chinophthalon, Diketo-Pyrrolo-Pyrrol, Disoxazinpigmenten, Indanthron, Perylen oder Phthalocyanin und deren beliebige Mischungen und/oder dass das das Funktionsadditiv ausgewählt ist aus der Gruppe bestehend aus Nukleierungsmitteln, Schichtsilikaten, insbesondere delaminierte Schichtsilikate, Stabilisatoren, insbesondere Thermostabilisatoren, Lichtstabilisatoren, UV-Stabilisatoren, Antistatika, Flammschutzmitteln, Haftvermittlern, Antiblockmitteln, Verarbeitungshilfsmitteln, Treibmitteln, antimikrobiellen Mitteln, insbesondere antibakterielle Mittel, und beliebigen Mischungen hiervon.

6. Masterbatch nach einem der vorangehenden Ansprüche, enthaltend 0,1 bis 65 Gew.-%, bevorzugt im Bereich von 0,5 bis 50 Gew.-%, besonders bevorzugt im Bereich von 1,0 bis 35 Gew.-% und insbesondere im Bereich von 1,5 bis 25 Gew.-%, an Ruß, insbesondere Farbruß, (Komponente b)), bezogen auf das Gesamtgewicht des Masterbatches.

7. Masterbatch nach Anspruch 5 oder 6, **dadurch gekennzeichnet, dass** der Ruß, insbesondere Farbruß, eine BET-Oberfläche, bestimmt gemäß ASTM D-6556-19, im Bereich von 10 bis 500 m²/g, bevorzugt im Bereich von 10 bis 400 m²/g, besonders bevorzugt im Bereich von 25 bis 400 m²/g und insbesondere im Bereich von 25 bis 350 m²/g, aufweist.

8. Masterbatch nach einem der vorangehenden Ansprüche, **dadurch gekennzeichnet, dass**
die Zusammensetzung gemäß iii) in Schritt iv) gemeinsam mit einem, insbesondere in Pulver- oder Granulatform zum Extruder zugegebenen, thermoplastischen Polymer, insbesondere ausgewählt aus der Gruppe bestehend aus Polyestern, Polystyrol, Styrol-Copolymeren, Polyamiden, Polyolefinen und deren beliebigen Mischungen, extrudiert wird.

9. Masterbatch nach einem der vorangehenden Ansprüche, **dadurch gekennzeichnet, dass**
die Schritte i), ii) und/oder iii), insbesondere die Schritte i) und ii) sowie gegebenenfalls auch iii), in einem diskontinuierlichen Mischaggregat durchgeführt werden, insbesondere ausgewählt ist aus der Gruppe bestehend aus Knetern, Innenmischern, Butterfly-Mischern, Dissolver-Mischern, Schnecken-Mischern, Paddel-Mischern, Planeten-Mischern, Perlmühlen und Dreiwalzreibstuhl-Mischern.

10. Masterbatch nach einem der Ansprüche 8 oder 9, **dadurch gekennzeichnet, dass** das thermoplastischen Polymer ein Rohpolymer darstellt und/oder ausgewählt ist aus der Gruppe bestehend aus
Polyolefinen, insbesondere Polypropylen, Polyethylen und/oder Ethylen/Propylen-Copolymere, Polyamiden, Polycarbonaten, Polybutylen, Polyisobutylen, Polymethylmethacrylaten, Polymethacrylmethylimiden, Polyoxymethylen, Polyphenylenethern, Polystyrol, Polytetrafluorethylen, Polyvinylacetat, Polyvinylalkohol, Polyvinylchlorid, Polyvinylidenchlorid, Polyvinylidenfluorid, Polyestern, insbesondere Polyethylenterephthalat und/oder Polybutylenterephthalat und/oder thermoplastischen Polyesterelastomeren, Polyurethanen, Ethylen-Tetrafluorethylen-Copolymeren, Ethylenvinylacetat-Copolymeren, Ethylenvinylalkohol-Copolymeren, Styrol-Copolymeren, insbesondere ausgewählt aus der Gruppe bestehend aus Acrylnitril-Butadien-Styrol-Copolymeren, Acrylester-Styrol-Acrylnitril-Copolymeren, Methylmethacrylat-Acrylnitril-Butadien-Styrol-Copolymeren, Methacrylat-Butadien-Styrol-Copolymeren, Styrol-Acrylnitril-Copolymeren, Styrolbutadien-Copolymeren und Styrol-Maleinsäureanhydrid-Copolymeren, und deren beliebige Mischungen.

11. Masterbatch nach einem der vorangehenden Ansprüche, enthaltend mehr als 50 Gew.-%, vorzugsweise mindestens 65 Gew.-% und besonders bevorzugt 70 bis 85 Gew.-% an mindestens einem anorganischen Pigment als Komponente b), bezogen auf das Gesamtgewicht des Masterbatches, oder enthaltend mehr als 25 Gew.-%, vorzugsweise mindestens 30 Gew.-% und besonders bevorzugt 35 bis 45 Gew.-% an mindestens einem organischen Pigment als Komponente b), bezogen auf das Gesamtgewicht des Masterbatches.

12. Masterbatch nach einem der vorangehenden Ansprüche, enthaltend 5 bis 95 Gew.-%, bevorzugt 10 bis 90 Gew.-% an Komponente c), bezogen auf das Gewicht der Komponente a).

13. Masterbatch nach einem der vorangehenden Ansprüche, **dadurch gekennzeichnet, dass**
in der gemäß Schritt i) erhaltenen Suspension die darin vorliegenden Pigmente, Füllstoffe, Funktionsadditive über eine durchschnittliche Partikelgröße kleiner oder gleich 50 µm verfügen.

14. Polymerwerkstoff, umfassend
mindestens einen Masterbatch gemäß einem der vorangehenden Ansprüche, bevorzugt in einer Mindermenge, besonders bevorzugt im Bereich von 0,1 bis 10 Gew.-% und insbesondere im Bereich von 0,5 bis 5 Gew.-%, und mindestens ein, insbesondere thermoplastisches, Matrixpolymer, bevorzugt in einer Hauptmenge, besonders bevorzugt im Bereich von 90 bis 99,9 Gew.-% und insbesondere im Bereich von 95 bis 99,5 Gew.-%, wobei der Masterbatch vorzugsweise verteilt in dem mindestens einen Matrixpolymer vorliegt, insbesondere ausgewählt ist aus der Gruppe bestehend aus Thermoplasten, thermoplastischen Elastomeren, Elastomeren und Duromeren oder Mischungen hiervon.

15. Formkörper, erhalten oder erhältlich durch Spritzgießen, Extrudieren, Formpressen, Walzenrotation, Rotationsformen, Lasersintern, Fused Deposition Modelling (FDM), Granulieren und/oder Gießen des Polymerwerkstoffs nach Anspruch 14 oder des Masterbatches nach einem der Ansprüche 1 bis 13.

16. Verfahren zur Herstellung eines Masterbatches gemäß einem der Ansprüche 1 bis 13 oder eines Polymerwerkstoffs gemäß Anspruch 14, umfassend die Schritte:
i) Mischen des paraffinischen und/oder naphthenischen Öls (Komponente c)) mit den Pigmenten und/oder Füllstoffen und/oder bei Raumtemperatur festen Funktionsadditiven oder einem Teil davon (Komponente b)) unter Ausbildung einer Suspension,
ii) Mischen der Suspension gemäß i) mit dem, insbesondere in Pulverform vorliegenden, auf einem Styrolblockcopolymeren basierenden thermoplastischen Elastomer (Komponente a)), insbesondere unter Ausbildung einer pulverförmigen Masse,
iii) gegebenenfalls Mischen der Zusammensetzung gemäß ii) mit einem weiteren, insbesondere dem verbleibenden, Teil der Komponente b), insbesondere unter Ausbildung einer pulverförmigen oder pastösen Masse, und
iv) Extrudieren der Zusammensetzung gemäß ii) oder iii), insbesondere unter Ausbildung eines Granulats.

17. Verfahren nach Anspruch 16, **dadurch gekennzeichnet, dass** die Zusammensetzung gemäß iii) in Schritt iv) gemeinsam mit einem, insbesondere in Pulver- oder Granulatform zum Extruder zugegebenen, thermoplastischen Polymer, insbesondere einem Polyester, Polyamid, Polystyrol, Styrol-Copolymeren oder Polyolefin, extrudiert wird.

18. Verfahren nach Anspruch 16 oder 17, **dadurch gekennzeichnet, dass** die Schritte i), ii) und/oder iii), insbesondere die Schritte i) und ii) sowie gegebenenfalls auch iii), in einem diskontinuierlichen Mischaggregat durchgeführt werden.

19. Verfahren nach einem der Ansprüche 16 bis 18, **dadurch gekennzeichnet, dass** die Schritte i), ii) und/oder iii), insbesondere die Schritte i) und ii) oder die Schritte i), ii) und iii), ohne externe Wärmezufuhr durchgeführt werden und/oder dass der Schritt iv) mit externer Wärmezufuhr durchgeführt wird, insbesondere mit einer Wärmemenge, die ausreicht, das auf einem Styrolblockcopolymeren basierende thermoplastische Elastomer (Komponente a)) und/oder das thermoplastische Polymer auf eine Temperatur oberhalb der Glasübergangstemperatur und/oder Schmelztemperatur zu erwärmen, und/oder dass die Schritte i), ii) und/oder iii), insbesondere die Schritte i) und ii) oder die Schritte i), ii) und iii), unter Kühlung durchgeführt werden.

20. Verfahren nach einem der Ansprüche 16 bis 19, **dadurch gekennzeichnet, dass** in der gemäß Schritt i) erhaltenen Suspension die darin vorliegende Komponente b) über eine durchschnittliche Partikelgröße kleiner oder gleich 50 µm verfügt.

21. Verwendung des Masterbatches nach einem der Ansprüche 1 bis 13 zur Einfärbung von Polymerwerkstoffen und/oder zur Ausstattung von Polymerwerkstoffen mit Funktionsadditiven und/oder Füllstoffen.

22. Kit-of-parts-System für die Herstellung eines Masterbatches gemäß einem der Ansprüche 1 bis 13, umfassend
Ai) eine Suspension enthaltend oder gebildet aus dem einen oder mehreren Pigmenten und/oder dem einen oder mehreren Füllstoffen und/oder dem einen oder mehreren bei Raumtemperatur festen Funktionsadditiven (Komponente b)) und dem einen paraffinischen und/oder naphthenischen Öl (Komponente c)) oder
Aii) eine Mischung aus der Suspension gemäß i) und dem mindestens einen auf einem Styrolblockcopolymeren basierenden thermoplastischen Elastomer (Komponente a)), insbesondere in Form einer pulverförmigen Masse, oder
Aiii) eine Mischung aus der Mischung gemäß ii) und einer Suspension enthaltend oder gebildet aus dem einen oder mehreren Pigmenten, insbesondere Farbruß, und/oder dem einen oder mehreren Füllstoffen und/oder dem einen oder mehreren bei Raumtemperatur festen Funktionsadditiven (Komponente b)), insbesondere in Form einer pulverförmigen oder pastösen Masse; und
B) dem mindestens einen, insbesondere in Pulver- oder Granulatform vorliegenden, thermoplastischen Polymer.
